# EUROPÄISCHE PATENTSCHRIFT

(11) **EP 3 470 282 B1**
(45) Veröffentlichungstag und Bekanntmachung des Hinweises auf die Patenterteilung: **29.09.2021**
(21) Anmeldenummer: 18199072.2
(22) Anmeldetag: 08.10.2018
(51) Int. Cl.: B60T 11/20, B60T 11/24

(54) **BREMSSYSTEM FÜR EIN RADFAHRZEUG**
BRAKE SYSTEM FOR A VEHICLE
SYSTÈME DE FREINAGE POUR VÉHICULE

(30) Priorität: 10.10.2017 DE 102017123497
(43) Veröffentlichungstag der Anmeldung: 17.04.2019
(73) Patentinhaber: Wacker Neuson Linz GmbH, 4063 Hörsching (AT)
(72) Erfinder: FARTHOFER, Dieter, 4052 Ansfelden (AT); MAHRINGER, Stephan, 4113 Sankt Martin im Mühlkreis (AT)
(74) Vertreter: Müller Hoffmann & Partner

(56) Entgegenhaltungen:
- AT-A1- 513 902
- DE-A1- 2 260 471
- DE-A1-102013 110 949
- US-A1- 2016 214 590

## Beschreibung

Die Erfindung betrifft ein Bremssystem für ein z.B. zweiachsiges Radfahrzeug.

Im Bausektor sind Fahrzeuge bekannt, die zwei Achsen aufweisen, von denen jedoch nur eine Achse abbremsbar ist, während die Räder auf der anderen Achse freilaufen können. Das Bremssystem für die bremsbare Achse weist dabei üblicherweise eine dosierbare Fußbremse in Kombination mit einer dosierbaren Handbremse auf. Die Dosierbarkeit der Handbremse ist eine Vorgabe der Straßenverkehrs-Zulassungs-Ordnung (StVZO), damit die Handbremse als Hilfsbremsanlage dienen kann. Sowohl die als Fußbremse ausgebildete Betriebsbremsanlage als auch die als Handbremse ausgebildete Hilfsbremsanlage wirken jeweils auf das linke und das rechte Rad der gebremsten Achse.

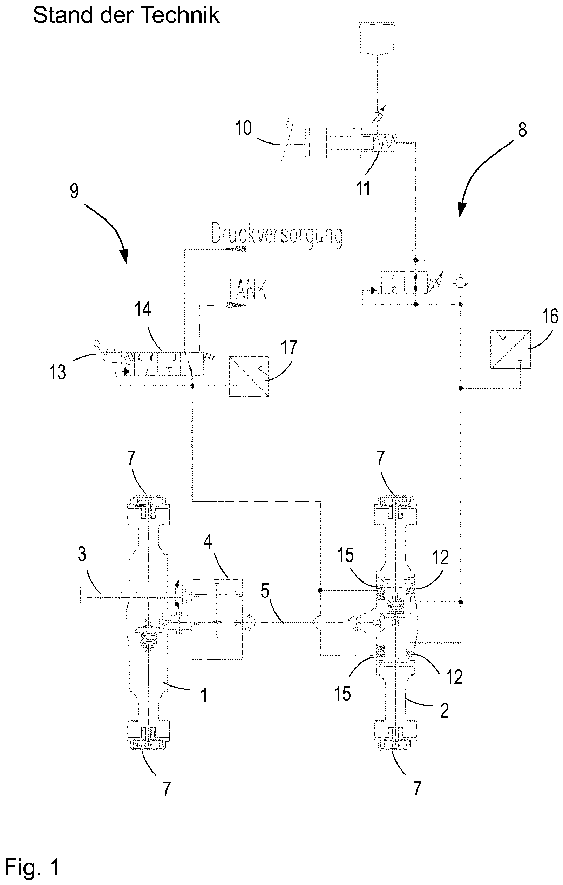

Figur 1 zeigt ein Beispiel für ein derartiges Bremssystem.

Das Bremssystem ist Bestandteil eines Fahrzeugs mit einer ungebremsten Hinterachse 1 und einer gebremsten Vorderachse 2. Die Achsen 1, 2 werden über eine Antriebswelle 3, ein Verteilergetriebe 4 und eine Kardanwelle 5 gleichzeitig angetrieben. An den stirnseitigen Enden der Hinterachse 1 und der Vorderachse 2 sind jeweils nicht dargestellte Räder montierbar, die auf Naben 7 befestigbar sind.

An der Vorderachse 2 sind Teile des Bremssystems vorgesehen, das eine Fußbremse 8 und eine Feststellbremse bzw. Handbremse 9 aufweist. Sowohl die Fußbremse 8 als auch die Handbremse 9 sind dosierbar. Das bedeutet, dass die Wirkung der Bremskraft in Abhängigkeit von der vom Bediener aufgebrachten Betätigungskraft und dem zur Verfügung stehenden Pedalweg eingestellt werden kann.

Je stärker der Bediener auf ein Bremspedal 10 der Fußbremse 8 tritt, desto stärker wirkt der durch einen mit dem Bremspedal 10 gekoppelten Hauptbremszylinder 11 erzeugte Bremsdruck. Dieser Bremsdruck in der Bremsflüssigkeit wird auf zwei Bremseinrichtungen 12 übertragen, die an der Vorderachse 2 jeweils dem linken Rad und dem rechten Rad zugeordnet sind. In bekannter Weise kann damit der Bediener die Bremswirkung durch Betätigen des Bremspedals 10 variieren.

In analoger Weise wirkt auch die Handbremse 9. Auch dort lässt sich über einen von Hand betätigbaren Bremshebel 13 und ein geeignetes Steuerventil 14 der Bremsdruck dosieren, der an zwei Feststellbremsen 15 am linken und am rechten Rad der Vorderachse 2 zugeführt wird.

Im Bremskreis der Fußbremse 8 ist ein erster Drucksensor 16 und im Bremskreis der Handbremse 9 ist ein zweiter Drucksensor 17 vorgesehen. Mithilfe der Drucksensoren 16, 17 können die beiden unabhängigen Bremskreise 8, 9 überwacht werden. Sie ermöglichen einerseits eine Abstimmung des gesamten Bremssystems bei der Montage im Werk und andererseits eine Überwachung im Betrieb.

Der Aufbau einer derartigen dosierbaren Handbremse ist aufwendig und kostspielig. Ihre Bereitstellung ist jedoch im Wesentlichen erforderlich, um die Vorgaben der StVZO hinsichtlich zweier dosierbarer Bremskreise zu erfüllen.

Aus der DE 10 2013 110 949 A1 und der DE 22 60 471 A1 sind jeweils Bremsanlagen mit Zweikreis-Bremssystemen bekannt, die zwei voneinander im Wesentlichen unabhängige Bremskreise aufweisen, bei denen ein Bremskreis notfalls allein ausreicht, um eine genügende Bremswirkung zu erzielen, falls der andere Bremskreis, z.B. aufgrund einer Leckage oder einer sonstigen Störung ausfällt. Dementsprechend ist es bei den Bremsanlagen notwendig, dass an einem Rad für jeden der beiden Bremskreise eine eigene Dosier-Bremseinrichtung vorgesehen ist.

Der Erfindung liegt die Aufgabe zugrunde, ein Bremssystem für ein Fahrzeug anzugeben, bei dem der Aufwand für die Bereitstellung einer dosierbaren Handbremse vermieden, aber dennoch die Vorgaben der StVZO eingehalten werden können.

Die Aufgabe wird erfindungsgemäß durch ein Bremssystem gemäß Anspruch 1 gelöst. Vorteilhafte Ausgestaltungen sind in den abhängigen Ansprüchen angegeben.

Ein Bremssystem für ein Fahrzeug weist zwei dosierbare Dosier-Bremskreise und einen nicht-dosierbaren Feststell-Bremskreis auf, wobei jeder der beiden Dosier-Bremskreise wenigstens eine Dosier-Bremseinrichtung aufweist, die einem Rad des Fahrzeugs zuordenbar ist, wobei die beiden Dosier-Bremskreise eine gemeinsame Dosier-Bedieneinrichtung aufweisen, mit der die beiden Dosier-Bremseinrichtungen gleichzeitig bedienbar sind, wobei die Dosier-Bedieneinrichtung einen Tandem-Bremszylinder aufweist, mit zwei Kammern, die jeweils Teil eines der Dosier-Bremskreise sind, wobei der Feststell-Bremskreis zwei Feststell-Bremseinrichtungen aufweist, die jeweils einem Rad des Fahrzeugs zuordenbar sind, und wobei der Feststell-Bremskreis eine Feststell-Bedieneinrichtung aufweist, mit der die beiden Feststell-Bremseinrichtungen gleichzeitig bedienbar sind.

Die beiden dosierbaren Dosier-Bremskreise sind somit auch zum Beispiel als Fußbremse zu verstehen und können beispielsweise durch ein Fußpedal gemeinsam und gleichzeitig bedient werden. "Dosieren" bedeutet dabei, dass die Bremskraft bzw. Bremswirkung der jeweiligen Dosier-Bremseinrichtung variabel einstellbar ist, zum Beispiel in Abhängigkeit von der Kraft, mit der ein Bediener mit seinem Fuß auf das Bremspedal einwirkt.

Zusätzlich zu den beiden durch die gemeinsame Dosier-Bedieneinrichtung betätigbaren Dosier-Bremskreisen ist der nicht-dosierbare Feststell-Bremskreis vorgesehen. "Nicht-dosierbar" bedeutet in diesem Fall, dass sich die Bremskraft nicht beliebig variieren, also dosieren lässt. Vielmehr kann die Bremskraft nur zwischen zum Beispiel zwei Stellungen, nämlich AUS und AN, also "kein Bremsdruck" oder "voller Bremsdruck" verstellt werden. In diesem Sinne kann der Feststell-Bremskreis entweder die Drehung der zugeordneten Räder freigeben oder durch die entsprechende Bremswirkung verhindern. Variable Zwischenstellungen, um auch eine gemächliche Verzögerung des Fahrzeugs zu erreichen, sind mit dem Feststell-Bremskreis nicht möglich.

Der Feststell-Bremskreis kann hydraulisch oder auch rein mechanisch, ohne Hydraulikkomponenten, ausgeführt sein. Die Bezeichnung "Bremskreis" ist in diesem Zusammenhang somit breit zu verstehen. Es ist somit nicht erforderlich, dass der Feststell-Bremskreis Hydraulikkomponenten aufweist. Vielmehr kann er bei einer alternativen Ausführungsform mit ausschließlich mechanischen Komponenten arbeiten.

Die Feststell-Bremseinrichtung kann, wie unten noch erläutert wird, z.B. als Federspeicherbremse o.ä. ausgestaltet sein. Das bedeutet, dass die Feststell-Bremseinrichtung im abgeschalteten, also drucklosen Zustand ihre volle Bremswirkung entfaltet. Nur im eingeschalteten Zustand, mit entsprechendem Bremsdruck, kann die Bremswirkung aufgehoben und damit die Drehung des zugeordneten Rads freigegeben werden. Auf diese Weise lässt sich gewährleisten, dass die Feststell-Bremswirkung sicher gegeben ist, auch wenn kein Bremsdruck aufgebaut werden kann.

Der Aufbau eines Tandem-Bremszylinders ist an sich bekannt. Der Tandem-Bremszylinder weist zwei Kammern auf, die jeweils einem der Dosier-Bremskreise zugeordnet sind und Bremsflüssigkeit des jeweiligen Dosier-Bremskreises enthalten. Die Kammern sind durch einen schwimmenden, also in beide Richtungen beweglichen Kolben voneinander getrennt. Das führt dazu, dass die Druckerhöhung in einer Kammer unmittelbar durch den schwimmenden Kolben auch auf die andere Kammer übertragen wird, so dass der hydraulische Druck in beiden Kammern und damit in beiden Dosier-Bremskreisen stets gleich ist. Dadurch kann eine gleichmäßige Bremswirkung erzielt werden. Die eigentliche Bremskraft wird durch einen weiteren Kolben eingeleitet, der durch ein Fuß- bzw. Bremspedal betätigt werden kann und der auf eine der beiden Kammern wirkt.

Bei Ausfall eines der beiden Dosier-Bremskreise verdoppelt sich aufgrund der Funktionsweise des Tandem-Bremszylinders der Pedalweg, falls ein Bremspedal als Bestandteil der Dosier-Bedieneinrichtung genutzt wird. Der Bediener erhält auf diese Weise eine Rückmeldung, dass ein Fehler im Bremssystem vorliegt. Die Dosier-Bremskreise lassen sich somit nach wie vor sicher betätigen und erfüllen ihre Funktion. Aufgrund des erhöhten Pedalweges erkennt der Bediener jedoch, dass die Bremse überprüft werden muss.

Mit der Bereitstellung von zwei dosierbaren Dosier-Bremskreisen ist bereits die Forderung der StVZO erfüllt, wonach zwei dosierbare Bremskreise bereitgestellt sein müssen.

Die im Stand der Technik als dosierbare Handbremse ausgeführte Feststellbremse muss nun nicht mehr dosierbar sein, was durch den nicht-dosierbaren Feststell-Bremskreis verwirklicht wird.

Der Feststell-Bremskreis weist eine geeignete Feststell-Bedieneinrichtung auf, zum Beispiel einen Handhebel oder Kippschalter, mit der die beiden Feststell-Bremseinrichtungen gleichzeitig bedienbar sind. Für die Feststell-Bedieneinrichtung genügt es, lediglich zwei Schaltzustände bereitzustellen, nämlich "AN" oder "AUS" (entsprechend einer Freigabe der Räder).

In dem Feststell-Bremskreis kann eine Verzweigung zu den beiden Feststell-Bremseinrichtungen vorgesehen sein. Mit Hilfe der Verzweigung wird somit der über die Feststell-Bedieneinrichtung freigegebene Bremsdruck an die beiden Feststell-Bremseinrichtungen gleichmäßig verteilt, um diese zu aktivieren bzw. zu lösen.

Die Feststell-Bremseinrichtungen können insbesondere derart aufgebaut sein, dass sie in einem Ruhezustand, also einem drucklosen Zustand ohne Bremsdruck das jeweils zugeordnete Rad zuverlässig abbremsen. Nur in einem Betriebszustand, in dem ein entsprechender Hydraulikdruck in dem Feststell-Bremskreis aufgebaut ist, kann die Haltekraft der Bremse überwunden und die Bremse freigegeben werden, so dass sich das zugeordnete Rad frei drehen kann.

Jeweils eine Dosier-Bremseinrichtung und eine Feststell-Bremseinrichtung können dem gleichen Rad des Fahrzeugs zuordenbar sein. Damit können an jedem Rad bzw. an der zu diesem gehörenden Nabe die beiden unterschiedlichen Bremseinrichtungstypen vorgesehen sein.

Als Bremseinrichtung eignet sich zum Beispiel eine Reibbremse mit einem Bremszylinder und einem Lamellenpaket. Wenn die Dosier-Bremseinrichtung und die Feststell-Bremseinrichtung dem gleichen Rad (bzw. der gleichen Nabe) des Fahrzeugs zugeordnet sind, können sie auch ein gemeinsames Bremslamellen-Paket aufweisen, auf das jedoch unterschiedliche, den jeweiligen Bremseinrichtungen zugeordnete Kolben einwirken.

Sämtliche Bremseinrichtungen können an einer gemeinsamen Achse des Fahrzeugs anordenbar sein. Diese Achse wird dann auch als "gebremste" Achse" bezeichnet, während die andere Achse des Fahrzeugs, an der keine Bremseinrichtungen vorgesehen sind, als "ungebremste Achse" gilt.

Die Feststell-Bremseinrichtungen können als Federspeicherbremse ausgebildet sein. Dabei kann die Federspeicherbremse einen federbelasteten Bremskolben aufweisen, der bei einem Druckaufbau in dem Feststell-Bremskreis von dem Bremslamellen-Paket abhebbar ist und der bei Drucklosigkeit in dem Feststell-Bremskreis aufgrund der Federbelastung gegen das Bremslamellen-Paket wirkt. Das bedeutet, dass die Bremskraft im Stillstand bzw. im ausgeschalteten (drucklosen) Zustand wirkt und ein Drehen des zugeordneten Rads verhindert. Erst bei Druckaufbau in dem Feststell-Bremskreis wird der Bremsdruck über die oben genannte Verzweigung an die beiden Feststell-Bremseinrichtungen geführt und hebt dort den Kolben gegen die Wirkung der jeweiligen Federn auf, so dass der Bremszustand aufgehoben wird.

In den Dosier-Bremskreisen kann jeweils ein Druckbegrenzungsventil vorgesehen sein. Damit ist es möglich, die maximale Bremskraft zu begrenzen.

In dem Feststell-Bremskreis kann jeweils ein Drosselrückschlagventil vorgesehen sein. Damit lässt sich das Einfalltempo der Feststell-Bremse reduzieren, um ein schlagartiges Bremsen nach Betätigen der Feststell-Bedieneinrichtung zu vermeiden. Umgekehrt kann ein Lösen der Feststell-Bremse sehr schnell und ohne Zeitverzögerung erfolgen.

Die Feststell-Bedieneinrichtung kann insbesondere als binäre Schalteinrichtung ausgebildet sein. So kann die Ansteuerung für die Feststell-Bremse zum Beispiel elektronisch (Schalter, Taster) oder mechanisch (Hebel) erfolgen. Auch ist die Bereitstellung eines nicht-dosierbaren Hydraulikventils, das lediglich zwischen zwei Stellungen schaltbar ist, möglich.

Es wird ein Arbeitsfahrzeug angegeben, mit zwei Achsen, an denen jeweils wenigstens ein linkes Rad und ein rechtes Rad auf der zugehörigen Achse drehbar angeordnet ist, wobei eine der Achsen eine bremsbare Achse ist, an der wenigstens eine Bremseinrichtung angeordnet ist, wobei die andere Achse eine frei drehbare Achse ist, an der keine Bremseinrichtung angeordnet ist, und wobei die Bremseinrichtung Teil eines wie oben beschriebenen Bremssystems ist.

Als Arbeitsfahrzeig eignet sich insbesondere ein Baufahrzeug, wie zum Beispiel ein Muldenfahrzeug, ein Dumper oder ein Radlader.

Diese und weitere Vorteile und Merkmale werden nachfolgend anhand eines Beispiels unter Zuhilfenahme der Figuren näher erläutert. Es zeigen
- **Figur 1**: ein aus dem Stand der Technik bekanntes Bremssystem; und
- **Figur 2**: ein erfindungsgemäßes Bremssystem.

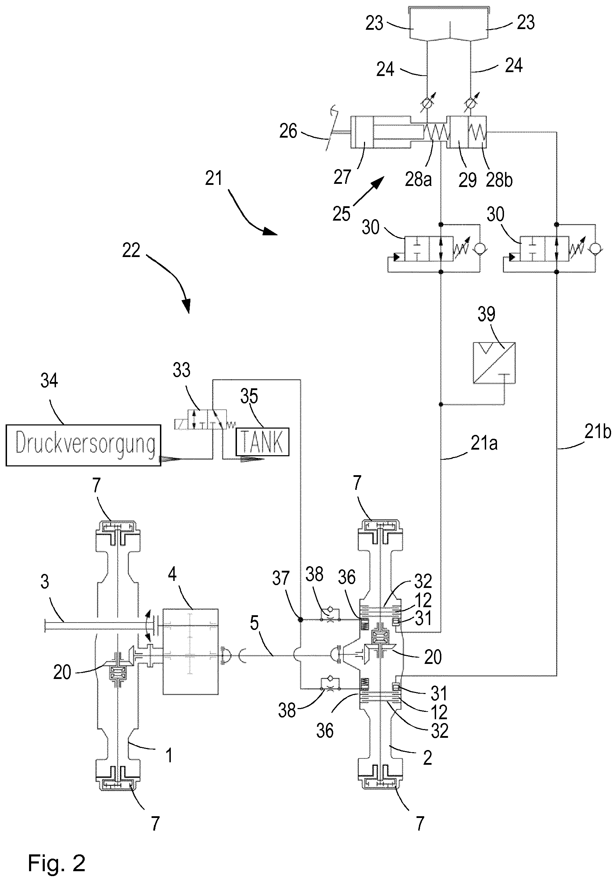

In Figur 2 wird schematisch ein Fahrzeug dargestellt, dessen mechanischer Aufbau dem Fahrzeug von Figur 1 entspricht. So weist das Fahrzeug eine Hinterachse 1 und eine Vorderachse 2 auf. Die Motorleistung wird über eine Antriebswelle 3, ein Verteilergetriebe 4 und eine Kardanwelle 5 an die beiden Achsen 1, 2 verteilt. An den jeweiligen Enden der Achsen 1, 2 sind drehbar gelagerte Naben 7 angeordnet, auf denen entsprechende, nicht-dargestellte Räder befestigt werden können.

Analog zu dem Fahrzeug von Figur 1 ist auch bei dem Fahrzeug von Figur 2 lediglich die Vorderachse 2 bremsbar, während die Hinterachse 1 frei mit dreht. Zu diesem Zweck ist an jeder Nabe 7 der Vorderachse 2 eine Bremseinrichtung 12 vorgesehen.

Jede der Achsen 1, 2 weist ein Differentialgetriebe 20 auf, um die beiden Räder der Achse voneinander zu entkoppeln.

Wenn somit eine der Bremseinrichtungen 12 an der Vorderachse 2 ausfällt, übernimmt die Bremseinrichtung 12 des anderen Rades die Bremsung des Fahrzeugs. Mittels der Kardanwelle 5 wird das Bremsmoment dann auch auf die andere Achse (Hinterachse 1) übertragen, so dass die (noch funktionsfähige) Bremse zwar nur an einem Rad positioniert ist, jedoch indirekt über die Kardanwelle 5 und die Differentialgetriebe 20 auf alle vier Räder wirkt.

Für die Ansteuerung der Bremseinrichtungen 12 sind getrennte Systeme vorgesehen, nämlich zwei dosierbare Dosier-Bremskreise 21 (bzw. 21a, 21b) und ein nicht-dosierbarer Feststell-Bremskreis 22.

Die Dosier-Bremskreise 21 sind in Figur 2 als linker Dosier-Bremskreis 21a (für das linke Rad bzw. die linke Nabe 7 der Vorderachse 2) und als rechter Dosier-Bremskreis 21b (analog für das rechte Rad bzw. die rechte Nabe 7 der Vorderachse 2) dargestellt.

Jeder der Dosier-Bremskreise 21 weist einen Ausgleichbehälter 23 für Bremsflüssigkeit auf, die jeweils über eine eigene Leitung 24 zu einem gemeinsamen Tandem-Bremszylinder 25 geführt wird. Der Tandem-Bremszylinder 25 ist mit einem Fußpedal 26 gekoppelt, über das der Bediener eine Druckkraft auf einen Kolben 27 ausüben kann.

Der Tandem-Bremszylinder 25 weist zwei Kammern 28a (für den linken Dosier-Bremskreis 21a) und 28b (für den rechten Dosier-Bremskreis 21b) auf. Die Kammern 28a, 28b sind durch einen schwimmenden Kolben 29 voneinander getrennt. Der schwimmende Kolben 29 stellt sicher, dass in beiden Kammern 28a, 28b stets der gleiche hydraulische Druck herrscht. Eventuell auftretende Druckunterschiede werden durch eine Verlagerung des schwimmenden Kolbens 29 unmittelbar ausgeglichen. Auf diese Weise lässt es sich erreichen, dass durch die beiden getrennten Dosier-Bremskreise 21 dennoch eine einheitliche, gleichförmige Bremswirkung erzielt wird.

In jedem der Dosier-Bremskreise 21a, 21b ist ein Druckbegrenzungsventil 30 vorgesehen, um den Maximaldruck zu begrenzen. Auf diese Weise soll eine Beschädigung der Bremse vermieden werden.

Die Dosier-Bremskreise 21a, 21b führen jeweils zu der ihnen zugeordneten Bremseinrichtung 12 und beaufschlagen dort einen (oder mehrere) Bremskolben 31.

Die Dosierung des Bremsdrucks erfolgt durch den Bediener durch Betätigen des Fußpedals 26. Je kräftiger der Bediener auf das Fußpedal 26 drückt, desto höher ist der Druck in den Kammern 28a, 28b, so dass die Bremskolben 31 entsprechend ebenfalls mit erhöhtem Druck beaufschlagt und gegen ein zugeordnetes Lamellen-Paket 32 gedrückt werden.

Der Feststell-Bremskreis 22 weist eine als Feststell-Bedieneinrichtung dienende Schalteinrichtung 33 auf. Die Schalteinrichtung 33 kann ein elektrischer Taster oder Schalter oder auch ein hydraulischer oder mechanischer Hebel oder Schalter sein. Die Schalteinrichtung 33 dient dazu, Druck von einer zu dem Fahrzeug gehörenden Druckversorgung 34 zu der nachfolgend noch erläuterten Bremse zu führen oder den Druck in der Bremsflüssigkeit zu einem Tank 35 abzuführen.

Zu dem Feststell-Bremskreis 22 gehört jeweils eine Federspeicherbremse 36, die der entsprechenden Bremseinrichtung 12 und damit Nabe 7 zugeordnet ist. Die Federspeicherbremse 36 weist einen Kolben auf, der federbeaufschlagt gegen das Lamellen-Paket 32 gedrückt wird. Nur bei Druckbeaufschlagung über den Feststell-Bremskreis 22 und entsprechend anliegender Druckversorgung 34 wird der Kolben in der Federspeicherbremse 36 von dem Lamellen-Paket 32 abgehoben und gibt so die Drehung frei.

Zur gleichmäßigen Verteilung des Bremsdrucks in dem Feststell-Bremskreis 32 ist eine Verzweigung 37 vorgesehen.

Zwischen der Verzweigung 37 und der jeweiligen Federspeicherbremse 36 ist jeweils ein Drosselrückschlagventil 38 vorgesehen. Das Drosselrückschlagventil 38 verhindert aufgrund seiner Drosselwirkung einen zu schnellen Druckabfall in dem Feststell-Bremskreis 22 bei Unterbrechen der Druckversorgung 34 bzw. Öffnen der Bremsleitung zum Tank 35. Dadurch ist es möglich, den Bremsvorgang nicht schlagartig, sondern etwas verzögert durchzuführen, um ein plötzliches Bremsen des Fahrzeugs zu vermeiden und in allen Betriebszuständen die Standsicherheit zu gewährleisten. Dies kann insbesondere dann komfortabel sein, wenn das Fahrzeug sich noch langsam bewegt, während der Fahrer bereits die Feststell-Bremse aktiviert hat.

In umgekehrter Strömungsrichtung wird bei dem Drosselrückschlagventil 38 das Rückschlagventil geöffnet, so dass bei einer Freigabe der Bremse die Bremse (Federspeicherbremse 36) ohne Verzögerung mit Bremsdruck beaufschlagt und damit freigegeben werden kann.

In einem der Dosier-Bremskreise 21a, 21b (im in Fig. 2 gezeigten Beispiel im linken Dosier-Bremskreis 21a) ist ein Drucksensor 39 vorgesehen, um den Bremsdruck zu überwachen. Aufgrund des Zusammenwirkens der beiden Dosier-Bremskreise 21a, 21b über den Tandem-Bremszylinder 25 wird lediglich ein Drucksensor 39 benötigt. Ein weiterer Drucksensor, z.B. im Feststell-Bremskreis 22, ist nicht erforderlich. Bei dem in Zusammenhang mit Fig. 1 erläuterten Stand der Technik ist es hingegen erforderlich, zwei Drucksensoren 16, 17 vorzusehen. Der Drucksensor 39 dient einerseits im Werk zur Abstimmung des Bremssystems und andererseits zur Überwachung im Betrieb.

Der in Figur 2 gezeigte erfindungsgemäße Aufbau eines Bremssystems unterscheidet sich somit von dem in Figur 1 zum Stand der Technik gezeigten Bremssystem insbesondere dadurch, dass jetzt zwar drei Bremskreise (in Figur 1 beim Stand der Technik 2 Bremskreise) aufgebaut sind, diese aber eine einfachere Bauweise ermöglichen. Durch die Nutzung des Tandem-Bremszylinders 25 und die beiden dosierbaren Dosier-Bremskreise 21 (Fußbremse) werden die Vorgaben der StVZO erfüllt. Die als Feststell-Bremskreis 22 nicht dosierbar ausgeführte Handbremse bzw. Feststell-Bremse kann damit einfacher aufgebaut werden.

## Patentansprüche

1. Bremssystem für ein Fahrzeug, mit
- zwei dosierbaren Dosier-Bremskreisen (21); und mit
- einem nicht dosierbaren Feststell-Bremskreis (22);
wobei
- der Feststell-Bremskreis (22) zwei Feststell-Bremseinrichtungen (36) aufweist, die jeweils einem Rad (7) des Fahrzeugs zuordenbar sind; und wobei
- der Feststell-Bremskreis (22) eine Feststell-Bedieneinrichtung (33) aufweist, mit der die beiden Feststell-Bremseinrichtungen (36) gleichzeitig bedienbar sind;
**dadurch gekennzeichnet, dass**
- jeder der beiden Dosier-Bremskreise (21) genau eine Dosier-Bremseinrichtung (12) aufweist, die einem Rad (7) des Fahrzeugs zuordenbar ist;
- die beiden Dosier-Bremskreise (21) eine gemeinsame Dosier-Bedieneinrichtung (25, 26) aufweisen, mit der die beiden Dosier-Bremseinrichtungen (12) gleichzeitig bedienbar sind; und dass
- die Dosier-Bedieneinrichtung einen Tandem-Bremszylinder (25) aufweist, mit zwei Kammern (28), die jeweils Teil eines der Dosier-Bremskreise (21) sind.

2. Bremssystem nach Anspruch 1, wobei die beiden Kammern (28) des Tandem-Bremszylinders (25) durch einen schwimmenden Kolben (29) voneinander getrennt sind.

3. Bremssystem nach Anspruch 1 oder 2, wobei in dem Feststell-Bremskreis (22) eine Verzweigung (37) zu den beiden Feststell-Bremseinrichtungen (36) vorgesehen ist.

4. Bremssystem nach einem der vorstehenden Ansprüche, wobei jeweils eine Dosier-Bremseinrichtung (12) und eine Feststell-Bremseinrichtung (36) dem gleichen Rad (7) des Fahrzeugs zuordenbar ist.

5. Bremssystem nach einem der vorstehenden Ansprüche, wobei sämtliche Bremseinrichtungen (12, 36) an einer gemeinsamen Achse (2) des Fahrzeugs anordenbar sind.

6. Bremssystem nach einem der vorstehenden Ansprüche, wobei die Feststell-Bremseinrichtungen als Federspeicherbremse (36) ausgebildet sind.

7. Bremssystem nach Anspruch 6, wobei die Federspeicherbremse (36) einen federbelasteten Bremskolben aufweist, der bei einem Druckaufbau in dem Feststell-Bremskreis (22) von einem Bremslamellen-Paket (32) abhebbar ist und der bei Drucklosigkeit in dem Feststell-Bremskreis (22) aufgrund der Federbelastung gegen das Bremslamellen-Paket (32) wirkt.

8. Bremssystem nach einem der vorstehenden Ansprüche, wobei in den Dosier-Bremskreisen (12) jeweils ein Druckbegrenzungsventil (30) vorgesehen ist.

9. Bremssystem nach einem der vorstehenden Ansprüche, wobei in dem Feststell-Bremskreis (22) für jede der beiden Feststell-Bremseinrichtungen (36) jeweils ein Drosselrückschlagventil (38) vorgesehen ist.

10. Bremssystem nach einem der vorstehenden Ansprüche, wobei die Feststell-Bedieneinrichtung (33) als binäre Schalteinrichtung ausgebildet ist.

11. Arbeitsfahrzeug, mit
- zwei Achsen (1, 2), an denen jeweils wenigstens ein linkes Rad und ein rechtes Rad auf der zugehörigen Achse drehbar angeordnet ist;
wobei
- eine der Achsen eine bremsbare Achse (2) ist, an der wenigstens eine Bremseinrichtung (12) angeordnet ist;
- die andere Achse eine frei drehbare Achse (1) ist, an der keine Bremseinrichtung angeordnet ist; und wobei
- die Bremseinrichtung (12) Teil eines Bremssystems nach einem der vorstehenden Ansprüche ist.

12. Arbeitsfahrzeug nach Anspruch 11, wobei die beiden Achsen (1, 2) durch eine Kardanwelle (5) verbunden sind.

## Claims

1. Braking system for a vehicle, comprising
- two meterable metering brake circuits (21); and comprising
- a non-meterable parking brake circuit (22);
wherein
- the parking brake circuit (22) has two parking brake devices (36) which can each be allocated to a wheel (7) of the vehicle; and wherein
- the parking brake circuit (22) has a parking operating device (33), with which the two parking brake devices (36) can be operated simultaneously;
**characterised in that**
- each of the two metering brake circuits (21) has precisely one metering brake device (12) which can be allocated to a wheel (7) of the vehicle;
- the two metering brake circuits (21) have a common metering operating device (25, 26), with which the two metering brake devices (12) can be operated simultaneously; and **in that**
- the metering operating device has a tandem brake cylinder (25), with two chambers (28) which are each part of one of the metering brake circuits (21).

2. Braking system as claimed in claim 1, wherein the two chambers (28) of the tandem brake cylinder (25) are separated from each other by means of a floating piston (29).

3. Braking system as claimed in claim 1 or 2, wherein a branch (37) to the two parking brake devices (36) is provided in the parking brake circuit (22).

4. Braking system as claimed in any one of the preceding claims, wherein in each case one metering brake device (12) and one parking brake device (36) can be allocated to the same wheel (7) of the vehicle.

5. Braking system as claimed in any one of the preceding claims, wherein all of the brake devices (12, 36) can be arranged on a common axle (2) of the vehicle.

6. Braking system as claimed in any one of the preceding claims, wherein the parking brake devices are designed as a spring-loaded brake (36).

7. Braking system as claimed in claim 6, wherein the spring-loaded brake (36) has a spring-loaded brake piston which, in the event of a pressure build-up in the parking brake circuit (22), can be lifted off a brake disk pack (32) and which, in the event of zero-pressure in the parking brake circuit (22), acts against the brake disk pack (32) by reason of the spring loading.

8. Braking system as claimed in any one of the preceding claims, wherein a pressure limiting valve (30) is provided in each of the metering brake circuits (12).

9. Braking system as claimed in any one of the preceding claims, wherein in each case a throttle non-return valve (38) is provided in the parking brake circuit (22) for each of the two parking brake devices (36).

10. Braking system as claimed in any one of the preceding claims, wherein the parking operating device (33) is designed as a binary switching device.

11. Working vehicle, comprising
- two axles (1, 2), on which in each case at least one left wheel and one right wheel are arranged so as to be able to rotate on the associated axle;
wherein
- one of the axles is a brakeable axle (2), on which at least one brake device (12) is arranged;
- the other axle is a freely rotatable axle (11), on which no brake device is arranged; and wherein
- the brake device (12) is part of a braking system as claimed in any one of the preceding claims.

12. Working vehicle as claimed in claim 11, wherein the two axles (1, 2) are connected by means of a cardan shaft (5).

## Revendications

1. Système de freinage pour véhicule, avec
- deux circuits de freinage à doseur (21) pouvant être dosés ; et avec
- un circuit de freinage de stationnement (22) ne pouvant pas être dosé ;
- le circuit de freinage de stationnement (22) comportant deux dispositifs de freinage de stationnement (36) qui peuvent être affectés respectivement à une roue (7) du véhicule ; et
- le circuit de freinage de stationnement (22) comportant un dispositif de commande de stationnement (33) avec lequel les deux dispositifs de freinage de stationnement (36) peuvent être commandés simultanément ;
**caractérisé en ce que**
- chacun des deux circuits de freinage à doseur (21) comporte précisément un dispositif de freinage à doseur (12) qui peut être affecté à une roue (7) du véhicule ;
- les deux circuits de freinage à doseur (21) comportent un dispositif de commande à doseur (25, 26) commun avec lequel les deux dispositifs de freinage à doseur (12) peuvent être commandés simultanément ; et **en ce que**
- le dispositif de commande à doseur comporte un cylindre de frein tandem (25) avec deux chambres (28) qui font chacune partie de l'un des circuits de freinage à doseur (21).

2. Système de freinage selon la revendication 1, les deux chambres (28) du cylindre frein tandem (25) étant séparées l'une de l'autre par un piston (29) flottant.

3. Système de freinage selon la revendication 1 ou 2, un embranchement (37) vers les deux dispositifs de freinage de stationnement (36) étant prévu dans le circuit de freinage de stationnement (22).

4. Système de freinage selon l'une des revendications précédentes, respectivement un dispositif de freinage à doseur (12) et un dispositif de freinage de stationnement (36) pouvant être affectés à la même roue (7) du véhicule.

5. Système de freinage selon l'une des revendications précédentes, tous les dispositifs de freinage (12, 36) pouvant être disposés sur un essieu (2) commun du véhicule.

6. Système de freinage selon l'une des revendications précédentes, les dispositifs de freinage de stationnement étant constitués en tant que frein à ressort accumulateur (36).

7. Système de freinage selon la revendication 6, le frein à ressort accumulateur (36) comportant un piston de freinage chargé par ressort qui, lors d'une constitution de pression dans le circuit de freinage de stationnement (22), peut être soulevé d'un paquet de lamelles de freinage (32) et qui, en l'absence de pression dans le circuit de freinage de stationnement (22), agit contre le paquet de lamelles de freinage (32) du fait de la charge par ressort.

8. Système de freinage selon l'une des revendications précédentes, respectivement une valve de limitation de pression (30) étant prévue dans les circuits de freinage à doseur (12).

9. Système de freinage selon l'une des revendications précédentes, respectivement un clapet antiretour à étranglement (38) étant prévu pour chacun des deux dispositifs de freinage de stationnement (36) dans le circuit de freinage de stationnement (22).

10. Système de freinage selon l'une des revendications précédentes, le dispositif de commande de stationnement (33) étant constitué en tant que dispositif de commutation binaire.

11. Véhicule de travail, avec
- deux essieux (1, 2) sur lesquels respectivement au moins une roue gauche et une roue droite sont disposées de façon rotative sur l'essieu correspondant ;
- un des essieux étant un essieu (2) pouvant être freiné sur lequel au moins un dispositif de freinage (12) est disposé ;
- l'autre essieu étant un essieu (1) librement rotatif sur lequel n'est disposé aucun dispositif de freinage ; et
- le dispositif de freinage (12) faisant partie d'un système de freinage selon l'une des revendications précédentes.

12. Véhicule de travail selon la revendication 11, les deux essieux (1, 2) étant raccordés par un arbre à cardan (5).
